# EUROPEAN PATENT SPECIFICATION

(11) **EP 1 489 294 B1**
(45) Date of publication and mention of the grant of the patent: **03.11.2010**
(21) Application number: 04014233.3
(22) Date of filing: 17.06.2004
(51) Int. Cl.: F02N 11/08, F02N 11/04

(54) **Control device and motor generator unit of vehicle**
Steuerungsgerät und Starter-Generator-Einheit für ein Kraftfahrzeug
Dispositif de commande et démarreur-alternateur pour véhicule

(30) Priority: 20.06.2003 JP 2003176328
(43) Date of publication of application: 22.12.2004
(73) Proprietor: Toyota Jidosha Kabushiki Kaisha, Toyota-shi, Aichi 471-8571 (JP)
(72) Inventor: Kusumi, Hidetoshi, Toyota-shi, Aichi-ken, 471-8571 (JP)
(74) Representative: TBK-Patent

(56) References cited:
- US-A- 6 054 826
- US-A1- 2002 141 122
- PATENT ABSTRACTS OF JAPAN vol. 015, no. 109 (M-1093), 15 March 1991 (1991-03-15) & JP 03 003969 A (MAZDA MOTOR CORP), 10 January 1991 (1991-01-10)
- PATENT ABSTRACTS OF JAPAN vol. 2000, no. 25, 12 April 2001 (2001-04-12) & JP 2001 212391 A (JUKI CORP), 7 August 2001 (2001-08-07) & JP 2001 212391 A (JUKI CORP) 7 August 2001 (2001-08-07)

## Description

### BACKGROUND OF THE INVENTION

### Field of the Invention

The present invention relates to a control device of a vehicle including an engine and a motor generator with a battery as the power source, and particularly, a vehicle control device that can prevent global warming and save resources by stopping the engine of the vehicle, whenever possible, at idle, and a motor generator unit suitable for such a control device.

### Description of the Background Art

From the standpoint of preventing global warming and saving resources, an idling stop system (also called economy running system or engine automatic stop-and-start system; also referred to as "eco-run system" hereinafter) that automatically stops the engine when the vehicle halts at a red light at a street crossing or the like, and then restarts the engine when the driver operates to initiate running (for example, depressing the accelerator pedal, releasing the brake pedal, switching the shift lever to a forward drive position, or the like) has been adapted to practical use. In such a system, a secondary battery such as a lead storage battery or lithium battery is mounted to supply power to the auxiliary equipment (air conditioner, head lamp, audio, and the like) during times when the vehicle is at halt. When the engine of a vehicle incorporating such a system is to be restarted, the crank shaft is rotated through a motor generator or a motor such as a starter motor using the power of the secondary battery to start the engine again.

When the engine is to be restarted through a motor generator or a motor such as a starter motor, a phenomenon called "warm locking" may occur. At the time of starting the engine, the engine is cranked up through the motor, whereby torque is applied. By the applied torque, the engine rotates against the compression pressure in the engine combustion chamber and the mechanical resistance caused by friction between the piston and the cylinder inner wall. At this stage, the high compression pressure at the initiation of engine warming will cause the piston to stop in the vicinity of the top dead center. The engine cannot rotate any further. This is the so-called warm locking phenomenon.

When engine start-up failure occurs due to such warm locking and the like, the piston is stuck in the vicinity of the top dead center even if torque is applied in the positive direction of rotation of the engine through the motor. Since the corresponding mechanical resistance is based on static friction, the level of resistance is great. Even inertia torque cannot be achieved by the flywheel and the like. If the motor is further operated in such a status, the current flowing across the motor will become so great that the temperature of the motor rises by heat generated therefrom, resulting in cut-off of power supply to the motor. This corresponds to a "locked" status of the motor.

Japanese Patent Laying-Open No. 3-3969 discloses an engine start-up control device solving the above-described problem. The start-up control device includes a start-up motor supplying torque for starting the engine in response to a start-up control signal, a start-up failure detection circuit detecting a start-up failure status when the engine maintains a stopped status for at least a predetermined period of time with the start-up motor operating, and a start-up operation control circuit to conduct intermittently a torque apply operation in the engine positive direction of rotation by the start-up motor when a start-up failure status is detected by the start-up failure detection circuit.

By the intermittent torque apply operation in the start-up control device disclosed in the aforementioned application, the piston is oscillated so as to return once to the bottom dead center from the vicinity of the top dead center, and then move again towards the top dead center. By virtue of this oscillation, the gas in the combustion chamber is released and the mechanical resistance is alleviated as based on dynamic friction. Furthermore, inertia torque is developed in addition to the torque from the start-up motor.

Japanese Patent Laying-Open No. 2001-212391 discloses a control device of a motor of a sewing machine. Although this publication is not directed to a motor incorporated in a vehicle as in the present invention, this control device of a sewing machine motor prevents failure of the motor when the motor of the sewing machine is repeatedly locked in a short period of time. This control device includes a temperature detection unit detecting the temperature of the sewing machine motor, a lock detection circuit detecting a locked status of the sewing machine motor, and a control circuit stopping the sewing machine motor to enter an energization inhibit status based on the detected result from the lock detection circuit, and allowing energization of the sewing machine motor based on the release of the energization inhibit status. The control device incorporates a control method modification circuit to modify the control method of the sewing machine motor in accordance with the control circuit based on the temperature detected by the temperature detection unit. In particular, the lock detection circuit detects a locked status of the sewing machine motor when the locked status of the sewing machine motor continues for a predetermined detection time, whereas the control method modification circuit alters the predetermined detection time based on the temperature of the sewing machine motor detected by the temperature detection unit.

In accordance with the control device of the sewing machine motor disclosed in the publication set forth above, the time required for detecting a locked status of the sewing machine motor by the lock detection circuit is modified based on the temperature of the sewing machine motor by the detection time modification circuit. Accordingly, the energization time with respect to the sewing machine motor in a locked status can be altered to allow suppression of increase in the internal temperature of the sewing machine motor caused by the locked motor in accordance with the temperature of the sewing machine motor. Specifically, when the temperature of the sewing machine motor detected by the temperature detection unit exceeds a predetermined temperature, the detection time modification circuit sets the predetermined detection time shorter than in the case where the detected temperature of the sewing machine motor is equal to or below the predetermined temperature.

The control devices disclosed in the above publications have problems set forth below.

When the engine is cranked up through the start-up motor in the start-up control device disclosed in Japanese Patent Laying-Open No. 3-3969, start-up failure is detected unless the engine attains a normal status of complete explosion before the elapse of a predetermined time (the determination time of motor lock) as long as the switching device of the start-up motor does not exceed the tolerable temperature. If the engine cannot be restarted in a favorable manner in the idling stop system, there is a possibility that the frequency of engine stop is reduced to prevent the gas mileage from being improved. This is because, when start-up failure is detected in an idling stop system, the engine will not be stopped even if the engine stop condition is satisfied subsequently.

In general, the motor lock determination time is set short to obviate destruction caused by temperature rise at the switching device. As a result, engine start-up failure will be detected frequently, inducing the tendency of the engine not being stopped temporarily in an idling stop system.

The control device disclosed in Japanese Patent Laying-Open No. 2001-212391 is applied to a sewing machine, not a vehicle of interest here. The control device thereof cannot overcome the problem encountered when an inexpensive idling stop system is to be realized, as set forth below.

When an economical idling stop system is to be realized, the design rules set forth below are employed. Specifically: the power source of the motor to restart the engine is based on one battery alone (for example, an inexpensive 14V-type lead battery that is widely used); the engine is to be restarted using a motor generator connected to the crank shaft of the engine via a belt, absent of noise caused by gears brought into engagement as in the case of a starter motor and having a starting response favorable than that of a starter motor; and the motor generator and the PCU (Power Control Unit) including an inverter circuit that is a driving circuit of the motor generator are to be rendered as economical as possible.

A possible approach to obtain a motor generator and PCU at low cost is to modify an inexpensive alternator generally incorporated and widely used in a vehicle (the armature and the rotor of the alternator are directly used while replacing the rectifier circuit with an inverter circuit), or to use an air-cooled PCU instead of a water-cooled PCU.

When such a system is to be implemented, it is preferable to use a motor generator, if possible, for restarting the engine in the idling stop system since there will be no abnormal noise and the response is high. Meanwhile, the armature and rotor components of the general alternator are used to be driven as a motor to crank up the engine. Since a great amount of torque is required for this cranking, the engine will be restarted under severe conditions for the general-purpose alternator and air-cooled PCU. When warm locking occurs under such severe conditions, heavy current will flow across the motor generator and inverter circuit. Switching control so as to restart the engine by means of the starter motor is possible in order to protect the electrical circuitry of the motor generator as well as the inverter circuit. However, it is preferable to avoid restarting the engine by means of a starter motor, is possible, since abnormal noise caused by gear engagement may occur and the response of engine restarting is poor.

In view of the above-described circumstances, switching is conducted such that the engine is to be restarted by means of the motor generator until a current application time elapses, in which case the temperature of the cooling fin of the PCU (the temperature of the power device of the inverter circuit is detected indirectly) exceeds a predetermined temperature, and the engine is to be restarted by means of the starter motor when the engine cannot be restarted at the elapse of the predetermined current application time (the case where the number of revolutions of the time does not exceed a predetermined number of revolutions after the engine attains a complete explosion status).

In other words, when the current from the inverter circuit is applied as the power of three phases to the stator coil of the motor generator in the case where the engine does not rotate and the motor generator is locked, the temperature of the power device of any one of the U phase, V phase and W phase will rise significantly. Destruction of the power device caused by such a high temperature must be avoided.

A vehicle is always subjected to the outside air temperature, as compared to a sewing machine that is used indoors. The temperature at which a locked status of the motor generator is detected (PCU air-cooling fin temperature) is set to a predetermined fix temperature. This predetermined temperature is defined taking into account the highest outside temperature. For example, based on an outer air temperature of 40°C (or, a more severe higher temperature), the time required for the air-cooling fin to reach the temperature of approximately 60°C (this temperature differs depending upon the type of the power device) is taken as the motor generator lock determination time (15 msec). If the lock determination time is set as such, determination will be made of a locked status at the elapse of 15 msec from initiating application of current even though the temperature of the power device is only approximately 40°C if the outside temperature is low (for example, 10°C). This means that, if the lock time is set based on the most severe outside temperature, the event of the engine being started by means of a starter motor than by means of the motor generator will become more frequent in the idling stop system. This is not desirable in view of abnormal noise generation and poor response.

The motor generator having an armature or rotor tolerable against such heavy current is disadvantageous in that the cost is increased since the components of the alternator cannot be used. Furthermore, usage of a water-cooled PCU will cause increase in costs.

US 2002/0141122 A1 shows a method and an apparatus for protecting an engine starter of a motor vehicle against overheating with enhanced reliability by controlling turn-on/turn-off of the starter in dependence of a conducting current of the starter, a starter temperature and an ambient temperature. The apparatus includes a voltage detecting means for measuring a supply voltage of the engine starter, a voltage wave-form information detecting means for detecting at least one of frequency information and amplitude information of a wave-form representing variations of the supply voltage as voltage wave-form information and a conduction time control means for controlling a conduction time period of that engine starter in accordance with the voltage wave-form information.

### SUMMARY OF THE INVENTION

An object of the present invention is to provide a control device and motor generator unit of a vehicle to realize an inexpensive idling stop system.

This object is achieved by a control device according to claim 1.

The invention is further developed by the features of the subclaims.

A control device of a vehicle according to the present invention controls a vehicle incorporated with an idling stop system that temporarily stops the engine when the status of the vehicle satisfies a predetermined condition. The vehicle is incorporated with a dynamo-electric machine that conducts restart of the engine after the engine is stopped temporarily, and a battery supplying power to the dynamo-electric machine. The control device includes a drive circuit connected to the battery to drive the dynamo-electric machine, a detection unit detecting the temperature of the dynamo-electric machine or drive circuit, a set circuit setting a lock determination time based on the temperature detected by the detection unit, and a determination unit determining a locked status of the dynamo-electric machine based on the set lock determination time.

In accordance with the present invention, the determination circuit determines a locked status of a dynamo-electric machine such as a motor generator that restarts the engine based on a lock determination time set by the set circuit. The lock determination time is set by the set circuit based on the temperature of the dynamo-electric machine or drive circuit (for example, a longer lock determination time is set as this temperature is lower). In other words, the lock determination time has temperature dependency. By virtue of such temperature dependency, the lock determination time can be lengthened and shortened when the time required for the temperature of the power device of a drive circuit such as the inverter circuit to arrive at the critical temperature is long and short, respectively, as in the case where the outside air temperature is low and high, respectively. Accordingly, in an idling stop system incorporating, for example, an engine, a motor generator to restart the engine, and a starter motor to restart the engine when the engine cannot be restarted by the motor generator, a lock determination time having temperature dependency is employed instead of the conventional lock determination time that is set uniformly envisaging a high outdoor air temperature. Therefore, the opportunity to restart the engine by means of the motor generator can be increased. Generation of abnormal noise caused by gear engagement is absent and the response of engine restart is favorable by restarting the engine through a motor generator, as compared to the case where the engine is restarted through a starter motor. A lock determination time having temperature dependency is also advantageous in that the temperature design value of the motor generator and the inverter circuit that is the drive circuit thereof can be set low. Therefore, an inexpensive motor generator and air-cooled inverter circuit can be realized. Thus, a vehicle control device directed to realize an inexpensive idling stop system can be provided.

Further preferably, the set circuit includes a circuit to set a longer lock determination time in proportion to a lower temperature.

By virtue of the lock determination time having temperature dependency in the present invention, a long lock determination time can be set when the time for the temperature of the power device of the drive circuit such as the inverter circuit to arrive at the critical temperature is long. Since a lock determination time having temperature dependency is taken instead of a lock determination time that is set uniformly envisaging a high outside temperature when the engine is to restarted through the motor generator or starter motor, the opportunity of the engine being restarted through the motor generator can be increased.

Further preferably, the dynamo-electric machine is a motor generator, functioning as a power generator during regenerative braking of the vehicle to charge the battery. The drive circuit corresponds to the inverter circuit.

In accordance with the present invention, an idling stop system can be realized based on the dynamo-electric machine functioning as a motor generator and the drive circuit functioning as an inverter supplying power of three phases to the motor generator.

Further preferably, the armature and rotor of the motor generator are components of the alternator. The inverter circuit is an air-cooled inverter circuit.

Since the motor generator is produced using the components of the alternator in the present invention, the fabrication cost is suppressed. Further, the PCU including the inverter circuit can be produced economically since the inverter circuit is air-cooled, not water-cooled.

Further preferably, the motor generator and the inverter circuit are provided in close range.

By providing the motor generator and the inverter circuit in close range in the present invention, only one sensor to detect the temperature of the motor generator and the inverter circuit is required. The temperature of both the motor generator and the inverter circuit can be detected representatively by such a sensor. Additionally, integration of the motor generator and the inverter circuit as a unit can be facilitated.

Further preferably, the dynamo-electric machine is a motor generator and a starter motor, and the drive circuit is an inverter circuit driving the motor generator. The control device further includes a switch circuit switching from the motor generator to the starter motor to restart the engine when determination is made of a locked status by the determination circuit.

By switching the operation to restart the engine through the starter motor by the switch circuit in the present invention, the engine can be restarted even if the lock determination time elapses after attempting to restart the engine by the motor generator and engine start-up by the motor generator fails.

According to another aspect of the present invention, a motor generator unit has a motor generator and inverter circuit of the above-described structure integrated.

According to the present invention, a motor generator unit that can realize an idling stop system economically can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a control block diagram of a vehicle in accordance with an embodiment of the present invention.
Fig. 2 shows a structure of the motor generator of Fig. 1.
Fig. 3 is a circuit diagram of the electric circuitry of the motor generator.
Fig. 4 represents the change in temperature of an MOSFET.
Fig. 5 shows a map stored in a memory of an HV_ECU.
Fig. 6 is a flow chart of the control structure of the program executed by the HV_ECU.
Fig. 7 is a timing chart of the status of restarting the engine in the vehicle of the embodiment of the present invention.
Fig. 8 is a timing chart representing the status of restarting an engine in a conventional vehicle.

### DESCRIPTION OF THE PREFERRED EMBODIMENTS

An embodiment of the present invention will be described hereinafter with reference to the drawings. In the following description, the same component have the same reference characters allotted. Their designation and function are identical. Therefore, detailed description thereof will not be repeated.

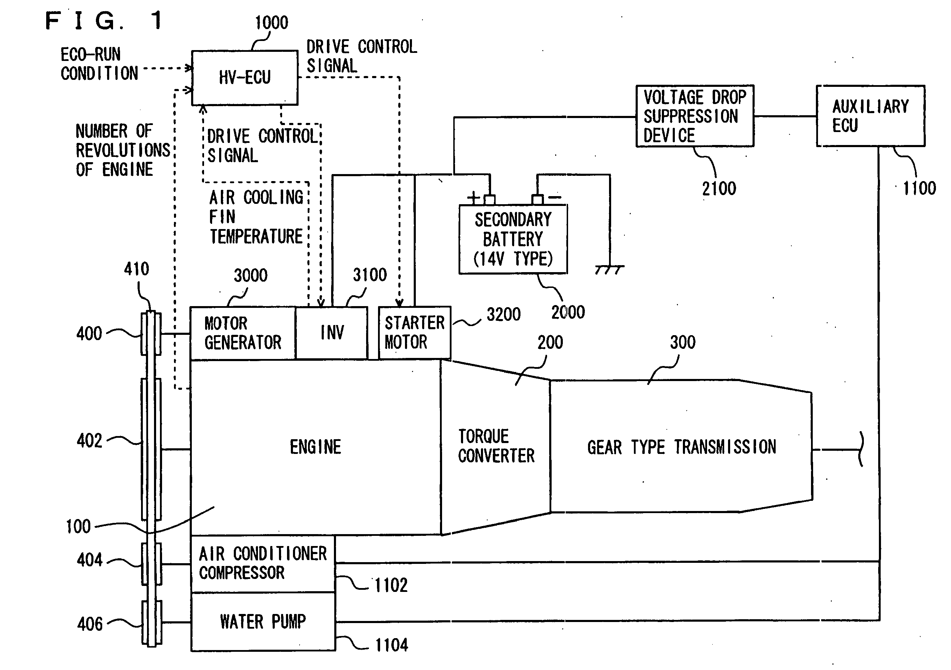

The control of a vehicle in accordance with an embodiment of the present invention will be described hereinafter with reference to the block diagram of Fig. 1. Although the power train of the present vehicle will be described as including a torque converter and a gear type transmission, the present invention is not limited thereto. For example, a CVT (Continuously Variable Transmission) of the belt type or toroidal type may be used instead of the gear type transmission.

Referring to Fig. 1, the power train of the present vehicle includes an engine 100 identified as a general internal combustion engine, a torque converter 200 connected to the output shaft of engine 100, identified as a fluid coupling with torque amplify capability, and a gear type transmission 300 connected to the output shaft of torque converter 200. A crank shaft pulley 402 of engine 100 is connected to a motor generator pulley 400 of a motor generator 3000, an air conditioner compressor pulley 404 of an air conditioner compressor 1102, and a water pump pulley 406 of a water pump 1104, via a belt 410.

The vehicle executes an idling stop system by an HV_ECU (Hybrid Vehicle-Electronic Control Unit) 1000. When the eco-run condition applied to HV_ECU 1000 satisfies a predetermined condition in the idling stop system, a stop command of engine 100 is output to the engine ECU not shown. When the eco-run condition is no longer satisfied, HV_ECU 1000 functions to supply the power of secondary battery 2000 from an inverter 3100 to motor generator 3000 to operate motor generator 3000 as a motor, whereby crank shaft pulley 402 of engine 100 is rotated through motor generator pulley 410 and belt 400 to restart (crank up) engine 100.

At this stage, control that is the feature of the present embodiment is executed between motor generator 3000 and inverter 3100 with respect to HV_ECU 1000. Inverter 3100 is an air-cooled inverter, and the temperature of the air-cooling fin is input to HV_ECU 1000.

HV_ECU 1000 outputs a drive control signal to inverter 3100. When restart of engine 100 by motor generator 3000 and inverter 3100 fails (when locking of motor generator 3000 occurs), HV_ECU 1000 switches control of engine restart so as to restart (crank up) engine 100 through starter motor 3200.

A general lead battery having the rated voltage of 14V is used for secondary battery 2000. Power is supplied from secondary battery 2000 to inverter 3100 and starter motor 3200, whereby engine restart following idling stop is conducted through motor generator 3000 or starter motor 3200. When the ignition switch is turned to the start position, engine 100 will be started to starter motor 3200 in a general manner.

Secondary battery 2000 is connected to an auxiliary ECU 1100 via a voltage drop suppression device 2100 (for example, backup boost converter, capacitor, lithium battery). Auxiliary ECU 1100 is connected to air conditioner compressor 1102 and water pump 1104. Air conditioner compressor 1102 and water pump 1104 are under control of auxiliary ECU 1100. Since engine 100 is stopped during an idling-stop mode, air conditioner compressor pulley 404 and water pump pulley 406 cannot be rotated by belt 410 via crank shaft puller 402 of engine 100. Therefore, auxiliary ECU 1100 provides control so as to drive air conditioner compressor 1102 and water pump 1104 using the power of secondary battery 2000.

An oil pump not shown is actuated through secondary battery 2000 in an idling-stop mode, likewise water pump 1104.

Air conditioner compressor 1102 and water pump 1104 are internally provided with the function to select whether to be driven through engine compressor pulley 404 or water pump pulley 406, or driven by the motor based on the power from secondary battery 2000. As an alternative to such functions, an electromagnetic clutch may be provided at crank shaft pulley 402 of engine 100. In an idling stop mode, the electromagnetic clutch is rendered non-transmissive to disconnect engine 100, and air conditioner compressor 1102 and/or water pump 1004 are actuated through motor generator 3000.

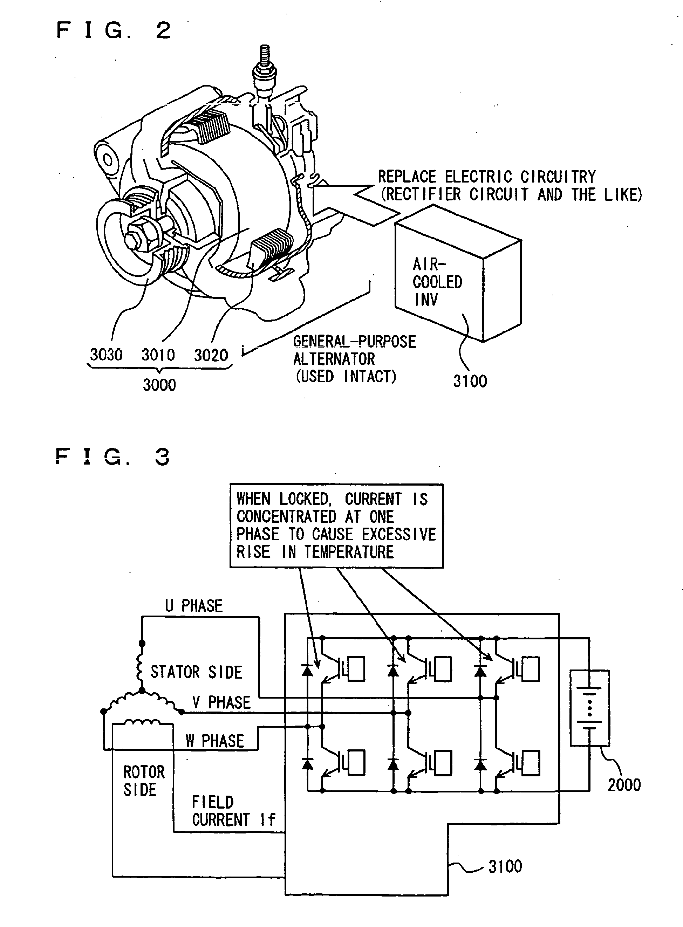

Fig. 2 shows a structure of motor generator 3000 of Fig. 1. As shown in Fig. 2, motor generator 3000 employed in the vehicle of the present embodiment is an inexpensive motor generator using the components of a general-purpose alternator.

In general, an alternator is rotated by a pulley 3030 connected via crank shaft pulley 402 of engine 100 and belt 410. The power generated at an alternator stator unit 3020 by the rotation of an alternator rotor unit 3010 is converted by a rectifier circuit called a rectifier from alternating current into direct current, which is supplied to secondary battery 2000.

Such a general-purpose alternator is widely employed in common vehicles. The fabrication cost of the general-purpose alternator is extremely low. The above-described alternator rotor unit 3010 and alternator stator unit 3020 are adapted for the rotor and stator of motor generator 3000 of the present invention. Pulley 3030 of Fig. 2 is identical to motor generator pulley 400 of Fig. 1.

Inverter 3100 is employed instead of the aforementioned rectifier circuit. Inverter 3100 causes alternator rotor unit 3010 and alternator stator unit 3020 to operate as motor generator 3000. Inverter 3100 is an air-cooled inverter. This provides the advantage that the cost can be lowered as compared to a water-cooled inverter.

Fig. 3 shows the electric circuitry of motor generator 3000 and inverter 3100. Inverter 3100 includes a general inverter circuit configured to supply the power of 3 phases to alternator stator unit 3020 by a plurality of switching circuits. By adjusting the current value of field current If across alternator rotor unit 3010, the torque generated from motor generator 3000 and the output power can be controlled when motor generator 3000 is operated as a motor and a generator, respectively.

Secondary battery 2000 supplies power to the switching circuits of inverter 3100 to supply power to alternator stator unit 3020 and/or alternator rotor unit 3010.

Power is supplied to motor generator 3000 by inverter 3100 receiving a drive control signal from HV_ECU 1000. Power is supplied to alternator stator unit 3020 formed of the U phase, V phase, and W phase. If warm locking occurs at engine 100 at the restarting operation of the engine here, motor generator 3000 will attain a locked status to cause current to concentrate at any one of the U phase, V phase and W phase. The temperature of the MOSFET (Metal Oxide Semiconductor Field-Effect Transistor) of that phase will rise. If such increase in temperature is uncontrolled, the MOSFET will be damaged.

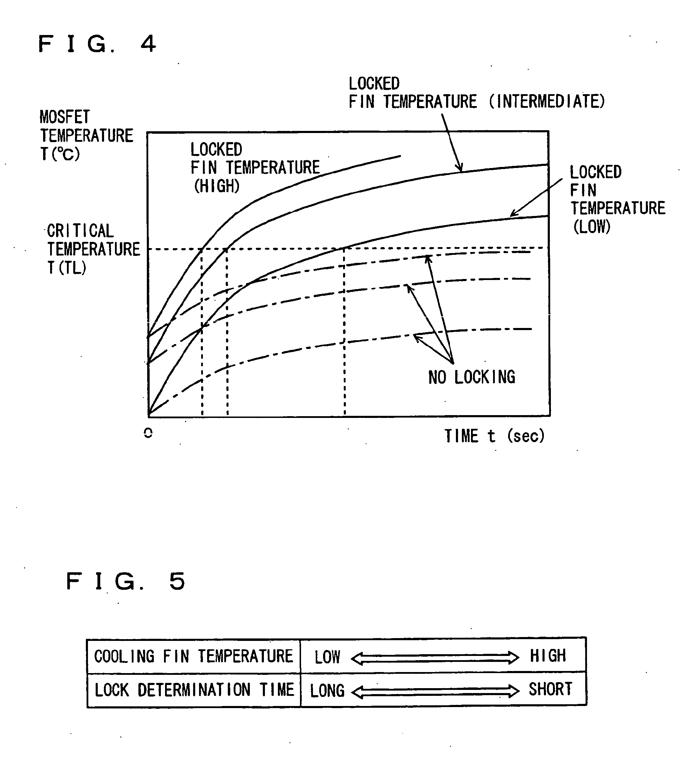

Fig. 4 shows the change in temperature of the MOSFET. Time is plotted along the abscissa and the MOSFET temperature is plotted along the ordinate. The events of locking are indicated by solid lines, corresponding to a high, intermediate, and low temperature of the fin. The events of no-locking are indicated by chain dotted lines, corresponding to three similar types of fin temperature.

In the case where no locking occurs, the MOSFET temperature does not reach the critical temperature of T (TL), independent of whether the fin temperature is high, intermediate, or low. Crank up of engine 100 by motor generator 3000 is completed and engine 100 attains a complete explosion status before the MOSFET reaches critical temperature T (TL). When the engine attains the number of revolutions of idling, the drive control signal of motor generator 3000 is suppressed. Therefore, the cooling fin temperature will not reach critical temperature T (TL).

In contrast, when locking occurs, the MOSFET temperature reaches critical temperature T (TL) more quickly as the fin temperature is higher. As shown in Fig. 4, the time required to reach critical temperature T (TL) becomes shorter as the fin temperature is higher when locking occurs. It is appreciated that the time required to reach critical temperature T (TL) becomes longer when the fin temperature is low, even if locking occurs.

Conventionally, the time it takes to reach critical temperature T (TL) was determined uniformly as the lock determination time, independent of fin temperature, in the above-described state of affairs.

In the embodiment of the present embodiment, the lock determination time that was conventionally defined uniformly is now set as a lock determination time depending on the cooling fin temperature, as shown in Fig. 5. Specifically, the map that is stored in the memory of HV_ECU 1000 is set so that the lock determination time becomes longer and shorter as the cooling fin temperature becomes lower and higher, respectively, as shown in Fig. 5.

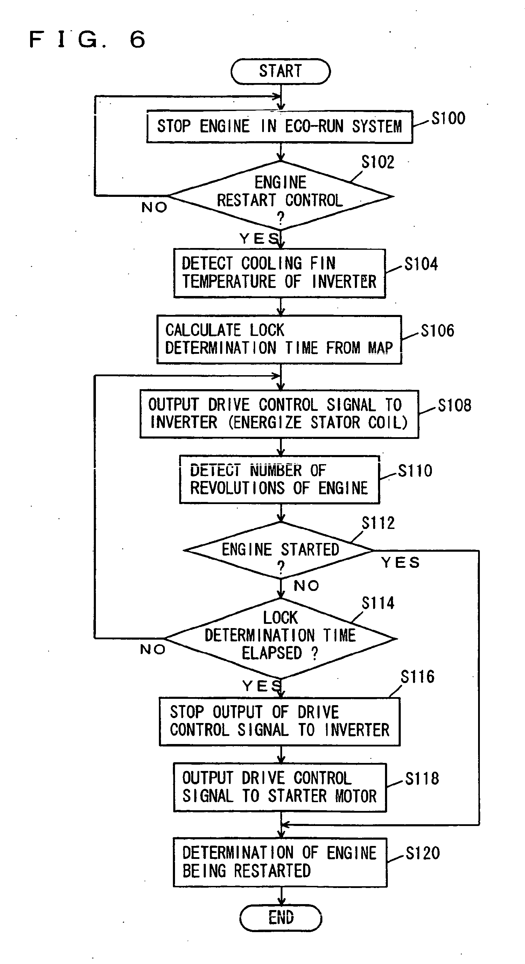

The control structure of a program executed at HV_ECU 1000 incorporated in the vehicle of the present embodiment will be described with reference to Fig. 6.

At step (step abbreviated as S hereinafter) 100, HV_ECU 1000 stops the engine in the eco-run system. HV_ECU 1000 determines whether engine 100 is to be stopped or not based on whether a predetermined condition is satisfied or not in view of the eco-run condition input to HV_ECU 1000. When the predetermined condition is satisfied, HV_ECU 1000 stops engine 100. Specifically, HV_ECU 1000 transmits an engine stop signal to an engine ECU not shown in Fig. 1.

At S102, HV_ECU 1000 determines whether engine restart control is to be conducted or not. Determination is made to carry out engine restart control when the eco-run condition input to HV_ECU 1000 is no longer satisfied. When engine restart control is effected (YES at S 102), control proceeds to S104, otherwise (NO at S102), control returns to S 100 where engine 100 maintains the status of being stopped in the eco-run system.

At S104, HV_ECU 1000 detects the cooling fin temperature of inverter 3100. A thermistor is provided in the proximity of the cooling fin of inverter 3100. The cooling fin temperature is input to HV_ECU 1000. HV_ECU 1000 detects the temperature of the cooling fin of inverter 3100 based on a signal from the thermistor.

At S106, HV_ECU 1000 calculates the lock determination time from the map shown in Fig. 5. At S 108, HV_ECU 1000 outputs a drive control signal to inverter 3100. At this stage, a stator coil is energized by the 3-phase power output from inverter 3100. By motor generator 3000 having the stator coil energized, crank shaft pulley 420 of engine 100 is rotated via motor generator pulley 400 and belt 410, whereby engine 100 is cranked up.

At S110, HV_ECU 1000 detects the number of revolutions of engine 100. Specifically, a signal from a revolution number sensor provided at the crank shaft or the like of engine 100 is input to HV_ECU 1000. Alternatively, the number of revolutions of the engine is detected by a signal from the revolution number sensor applied to HV_ECU 1000 via an engine ECU not shown.

At S112, HV_ECU 1000 determines whether engine 100 has been started or not. This is based on whether the number of revolutions of engine 100 has attained at least a predetermined number of revolutions of idling. If engine 100 has been started (YES at S112), control proceeds to S120, otherwise (NO at S112), control proceeds to S114.

At S 114, HV_ECU 1000 determines whether the lock determination time has elapsed or not. The lock determination time is counted starting from the output of a drive control signal to inverter 3100. When the lock determination time has elapsed (YES at S114), control proceeds to S 116, otherwise (NO at S114), control returns to S108. In the latter case, a drive control signal is continuously output to inverter 3100, so that the stator coil is energized. Motor generator 3000 functions as a motor, whereby engine 100 is cranked up via crank shaft pulley 402.

At S 116, HV_ECU 1000 inhibits output of a drive control signal to inverter 3100. At S 118, HV_ECU 1000 outputs a drive control signal to starter motor 3200. Specifically, the engine restart operation is switched from motor generator 3000 to starter motor 3200 since start-up of engine 100 was not identified even at the elapse of the lock determination time having temperature dependency.

At S120, HV_ECU 1000 determines that the engine has been restarted. Restart of engine 100 is determined based on whether the number of revolutions of the engine has attained the number of revolutions of idling after a drive control signal is output to starter motor 3200 at S118.

The operation of a vehicle incorporated with HV_ECU 100 identified as the control device of the present embodiment, motor generator 3000 and inverter 3100 will be described, based on the structure set forth above and the flow chart.

When the vehicle halts at a red light or the like, HV_ECU 1000 outputs a signal to stop engine 100 when a predetermined eco-run condition is satisfied (S100). When the driver of the vehicle puts his/her foot off the break pedal and depresses the accelerator pedal, the eco-run condition is no longer satisfied, and restart of engine 100 is designated (YES at S102).

The temperature of the cooling fin of inverter 3100 is detected (S104), and the lock determination time is calculated based on the map shown in Fig. 5 (S 106). In this map, the lock determination time is set longer as the cooling fin temperature is lower and set shorter as the cooling fin temperature is higher.

A drive control signal is output to inverter 3100, whereby the stator coil is energized (S108). In response, the rotor of motor generator 3000 rotates, whereby crank shaft pulley 402 of engine 100 is rotated via motor generator pulley 400 and belt 420 to crank up engine 100.

Since HV_ECU 1000 transmits an engine start-up signal to the engine ECU, fuel is injected to engine 100 by the engine ECU, and an engine start-up operation is initiated in synchronization with the crank up operation by motor generator 3000. The number of revolutions of the engine is detected (S110). Identification is made that engine 100 has restarted when the number of revolutions of the engine has increased to approximately the number of revolutions of idling (YES at S112). Thus, determination is made that engine 100 has restarted (S120).

When start-up of engine 100 is not identified before the elapse of the lock determination time after a drive control signal has been output to inverter 3100 (NO at S112 and YES at S114), output of a drive control signal to inverter 3100 from HV_ECU 1000 is suppressed (S116). Then, a drive control signal is output to starter motor 3200 (S118). Starter motor 3200 cranks up and restarts engine 100 based on the drive control signal from HV_ECU 1000.

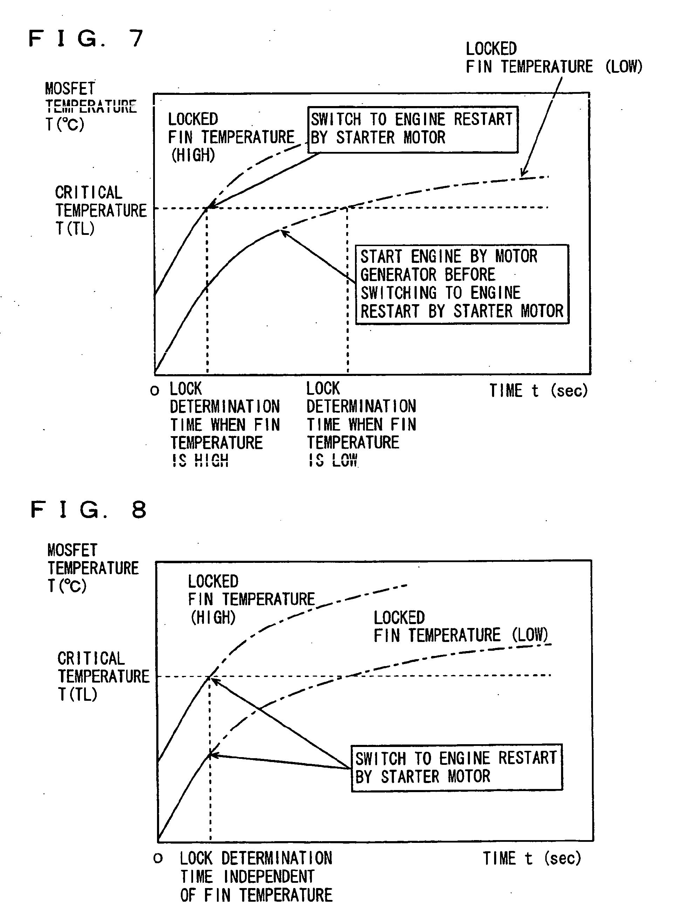

The operation of this stage will be described with reference to Figs. 7 and 8. Figs. 7 and 8 are timing charts of the status of restarting the engine of a vehicle in accordance with the embodiment of the present invention and in accordance with a conventional vehicle, respectively.

The conventional vehicle takes a uniform lock determination time as shown in Fig. 8, absent of temperature dependency. This feature differs from that of the embodiment of the present invention. It is apparent by comparing Figs. 7 and 8 that the lock determination time is set short and long correspondingly when the fin temperature is high and low, respectively, in Fig. 7, whereas the lock determination time is set to the shorter one, independent of the fin temperature, in Fig. 8.

Since a long lock determination time is set when the fin temperature is low as shown in Fig. 7, engine will be started by motor generator 3000 before switching to restarting the engine by starter motor 3200 until the MOSFET temperature reaches critical temperature T (TL).

In the comparison example of Fig. 8 based on the same condition (low cooling fin temperature), determination will be made that locking has occurred before the MOSFET temperature reaches critical temperature T (TL) even if the cooling fin temperature is low since the lock determination time is set independent of the fin temperature. Switching is effected to restart engine 100 by means of starter motor 3200 than by means of motor generator 3000.

When engine 100 is restarted through starter motor 3200, the pinion gear of starter motor 3200 is forced to mesh with the gear of the flywheel by means of a magnet switch. In other words, crank up is conducted with the pinion gear of starter motor 3200 connected to the gear of the flywheel of engine 100, causing generation of noise. Furthermore, the time required to achieve engagement between the gear of the flywheel and the pinion gear of the starter motor yields the disadvantage that the response is deteriorated than in the case where engine 100 is restarted through motor generator 3000. It is therefore preferable to restart engine 100 through motor generator 3000.

Thus, temperature dependency is given to the lock determination time of the motor generator and inverter in the HV_ECU of the present embodiment, so that the engine can be restarted through the motor generator, whenever possible, in the idling stop system. Since the lock determination time is set longer as the cooling fin temperature of the inverter is lower, the conventional event of switching to the starter motor for the engine restarting operation even before the MOSFET temperature arrives at the critical temperature is now avoided. The opportunity to restart the engine by the motor generator is increased. By reducing the event of restarting the engine through the starter motor, generation of abnormal noise can be reduced. Furthermore, the response in the engine restarting operation can be improved.

As mentioned previously, the rotor and stator of the general-purpose alternator is used for the rotor unit and stator unit of motor generator 3000 in the present embodiment. Therefore, an inexpensive motor generator can be realized.

The inverter that is the drive circuit of the motor generator is air-cooled, not water-cooled. Therefore, the PCU including the inverter can be reduced in cost.

Furthermore, only a 14V-type lead battery that is widely used is mounted as the secondary battery. Therefore, an inexpensive idling stop system can be provided, as compared to the case where a 42V-type battery for driving auxiliary equipment when the engine stops during idling is provided.

An HV_ECU (1000) executes idling stop control to stop an engine (100) temporarily when the status of the vehicle satisfies a predetermined condition. The engine (100) is restarted by a motor generator (3000) or a starter motor (3200). In accordance with a lock determination time having temperature dependency based on the temperature of the cooling fin of the inverter (3100) (the lock determination time is set longer as the cooling fin temperature is lower), the HV_ECU (1000) switches to restart the engine (100) by the starter motor (3200) when the engine (100) is not restarted at an elapse of a lock determination time that is based on restarting the engine (100) by the motor generator (3000).

## Claims

1. A control device (1000) of a vehicle incorporated with an idling stop system that stops an engine (100) temporarily when a status of the vehicle satisfies a predetermined condition,
said vehicle incorporating a dynamo-electric machine that restarts said engine (100) after said temporary stop, and a battery (2000) supplying power to said dynamo-electric machine, wherein said dynamo-electric machine is a motor generator (3000) and starter motor (3200),
said control device (1000) comprising
a drive circuit connected to said battery (2000) to drive said dynamo-electric machine,
a detection unit detecting a temperature of one of said dynamo-electric machine and said drive circuit,
a set circuit setting a lock determination time based on the temperature detected by said detection unit,
a determination circuit determining a locked status of said dynamo-electric machine when said set lock determination time elapsed from the point when power is supplied to the dynamo-electric machine by the drive circuit, and
a switch circuit switching engine restart by said motor generator (3000) to engine restart by said starter motor (3200) when determination is made of a locked status by said determination circuit.

2. The control device (1000) of a vehicle according to claim 1, wherein said set circuit includes a circuit setting a long lock determination time as said temperature is lower.

3. The control device (1000) of a vehicle according to claim 1 or 2, wherein said motor generator (3000), functioning as a generator in regenerative braking of said vehicle to charge said battery (2000), and said drive circuit is an inverter circuit (3100).

4. The control device (1000) of a vehicle according to claim 3, wherein an armature and rotor of said motor generator (3000) are components of an alternator, and said inverter circuit (3100) is an air-cooled inverter circuit.

5. The control device (1000) of a vehicle according to claim 3 or 4, wherein said motor generator (3000) and said inverter circuit (3100) are provided in close range.

6. A motor generator unit in which the motor generator (3000) and inverter circuit (3100) defined in any of claims 3 to 5 are integrated.

## Patentansprüche

1. Steuervorrichtung (1000) eines Fahrzeugs, das mit einem Leerlaufstoppsystem versehen ist, das eine Antriebsmaschine (100) vorübergehend stoppt, wenn ein Status des Fahrzeugs eine vorbestimmte Bedingung erfüllt,
wobei das Fahrzeug eine dynamoelektrische Maschine, die die Antriebsmaschine (100) nach dem vorübergehenden Stopp neu startet, und eine Batterie (2000) enthält, die der dynamoelektrischen Maschine Energie zuführt, wobei die dynamoelektrische Maschine ein Motorgenerator (3000) und ein Starter (3200) ist,
wobei die Steuervorrichtung (1000) Folgendes aufweist:
eine Antriebsschaltung, die mit der Batterie (2000) verbunden ist, um die dynamoelektrische Maschine anzutreiben,
eine Erfassungseinheit, die eine Temperatur von einer der dynamoelektrischen Maschine und der Antriebsschaltung erfasst,
eine Einstellschaltung, die eine Sperrbestimmungszeit basierend auf der durch die Erfassungseinheit erfassten Temperatur einstellt,
eine Bestimmungsschaltung, die einen gesperrten Status der dynamoelektrischen Maschine bestimmt, wenn die eingestellte Sperrbestimmungszeit von dem Punkt, an dem Energie der dynamoelektrischen Maschine durch die Antriebsschaltung zugeführt wird, abgelaufen ist, und
eine Umschaltschaltung, die einen Maschinenneustart durch den Motorgenerator (3000) auf einen Maschinenneustart durch den Starter (3200) umschaltet, wenn eine Bestimmung eines gesperrten Status durch die Bestimmungsschaltung gemacht ist.

2. Steuervorrichtung (1000) eines Fahrzeugs nach Anspruch 1, wobei die Einstellschaltung eine Schaltung umfasst, die eine lange Sperrbestimmungszeit einstellt, wenn die Temperatur niedriger ist.

3. Steuervorrichtung (1000) eines Fahrzeugs nach Anspruch 1 oder 2, wobei der Motorgenerator (3000), der als ein Generator bei Nutzbremsung des Fahrzeugs fungiert, um die Batterie (2000) zu laden, und die Antriebsschaltung eine Inverterschaltung (3100) darstellt.

4. Steuervorrichtung (1000) eines Fahrzeugs nach Anspruch 3, wobei ein Anker und ein Rotor des Motorgenerators (3000) Komponenten eines Wechselstromgenerators sind, und die Inverterschaltung (3100) eine luftgekühlte Inverterschaltung darstellt.

5. Steuervorrichtung (1000) eines Fahrzeugs nach Anspruch 3 oder 4, wobei der Motorgenerator (3000) und die Inverterschaltung (3100) in einem nahen Bereich bereitgestellt sind.

6. Motorgeneratoreinheit, in welcher der Motorgenerator (3000) und die Inverterschaltung (3100), die in einem der Ansprüche 3 bis 5 definiert sind, integriert sind.

## Revendications

1. Dispositif de commande (1000) d'un véhicule intégré à un système d'arrêt de ralenti qui arrête temporairement un moteur (100) lorsqu'un état du véhicule satisfait une condition prédéterminée,
ledit véhicule comprenant une machine dynamo électrique qui redémarre ledit moteur (100) après ledit arrêt, et une batterie (2000) délivrant de la puissance à ladite machine dynamo électrique, dans lequel ladite machine dynamo électrique est un générateur de moteur (3000) et un démarreur (3200),
ledit dispositif de commande (1000) comportant un circuit de commande relié à ladite batterie (2000) pour commander ladite machine dynamo électrique,
une unité de détection détectant une température de l'un de ladite machine dynamo électrique et dudit circuit de commande,
un circuit de détermination déterminant un temps de détermination de verrouillage en fonction de la température détectée par ladite unité de détection,
un circuit de détermination déterminant un état verrouillé de ladite machine dynamo électrique lorsque ledit temps de détermination de verrouillage déterminé s'est écoulé à partir du moment où la puissance est délivrée à la machine dynamo électrique par le circuit de commande, et
un circuit de commutation commutant le redémarrage du moteur par ledit générateur de moteur (3000) pour redémarrer le moteur par ledit démarreur (3200) lorsqu'il est effectué une détermination d'un état verrouillé par ledit circuit de détermination.

2. Dispositif de commande (1000) d'un moteur selon la revendication 1, dans lequel ledit circuit de détermination comprend un circuit déterminant un long temps de détermination de verrouillage lorsque ladite température est basse.

3. Dispositif de commande (1000) d'un véhicule selon la revendication 1 ou 2, dans lequel ledit générateur de moteur (3000) fonctionne en tant que générateur lors d'un freinage par récupération dudit véhicule pour charger ladite batterie (2000), et ledit circuit de commande est un circuit inverseur (3100).

4. Dispositif de commande (1000) d'un véhicule selon la revendication 3, dans lequel un induit et un rotor dudit générateur de moteur (3000) sont les composants d'un alternateur, et ledit circuit inverseur (3100) est un circuit inverseur refroidi par air.

5. Dispositif de commande (1000) d'un véhicule selon la revendication 3 ou 4, dans lequel ledit générateur de moteur (3000) et ledit circuit inverseur (3100) sont prévus à proximité.

6. Unité de générateur de moteur dans laquelle le générateur de moteur (3000) et le circuit inverseur (3100) défini selon l'une quelconque des revendications 3 à 5 sont intégrés.
